# EUROPÄISCHE PATENTSCHRIFT

(11) **EP 2 857 182 B1**
(45) Veröffentlichungstag und Bekanntmachung des Hinweises auf die Patenterteilung: **08.11.2017**
(21) Anmeldenummer: 14003175.8
(22) Anmeldetag: 13.09.2014
(51) Int. Cl.: B29C 70/74, B60J 10/00

(54) **Verfahren zur Herstellung eines stellenweise verstärkten Dichtungsstrangs**
Method for producing a sealing thread that is reinforced in some locations
Procédé de fabrication d'une bande d'étanchéité renforcée à certains endroits

(30) Priorität: 17.09.2013 DE 102013110234; 12.02.2014 DE 102014101753
(43) Veröffentlichungstag der Anmeldung: 08.04.2015
(73) Patentinhaber: CQLT SaarGummi Technologies S.à.r.l., 5544 Remich (LU)
(72) Erfinder: Kast, Christian, D-66683 Merzig-Brotdorf (DE)
(74) Vertreter: Patentanwälte Bernhardt / Wolff Partnerschaft mbB

(56) Entgegenhaltungen:
- EP-A1- 1 452 372
- WO-A1-2004/106129
- DE-A1-102007 018 792
- DE-U1- 7 833 579
- GB-A- 1 559 251
- US-A1- 2005 123 718

## Beschreibung

Die Erfindung betrifft ein Verfahren zur Herstellung eines stellenweise verstärkten, schlauchartig mit einem Hohlraum extrudierten Dichtungsstrangs, wobei an wenigstens einer vorbestimmten Längsposition des Dichtungsstrangs in den Hohlraum ein den Dichtungsstrang verstärkendes, fließfähiges und sich in dem Hohlraum zu einem elastisch verformbaren Material verfestigendes Material eingebracht und das verfestigte Material in dem Hohlraum durch Formschluss mit der Hohlraumwand in Stranglängsrichtung fixiert wird. Stellenweise verstärkte Dichtungsstränge werden insbesondere zur Bildung von Dichtungen an Fahrzeugtüren, Türeinfassungen, Karosserieklappen oder dergleichen benötigt.

In einem durch Benutzung bekannten solchen Verfahren werden schlauchartig mit einem Hohlraum extrudierte und auf eine bestimmte Länge zugeschnittene Dichtungsstränge stellenweise durch Einsatzstücke aus Elastomermaterial verstärkt. Die Einsatzstücke werden z.B. mit Hilfe von Stäben, die mit einer Längenskala versehen sind, oder Stäben bekannter Länge in den Hohlraum eingeschoben und an die vorgesehene Längsposition gebracht. Diese Längsposition entspricht einer im verbauten Zustand des Dichtungsstrangs besonders beanspruchten Stelle, z.B. einer Biegung, an welcher durch die Verstärkung einer unerwünschten Verformung entgegengewirkt wird oder einer Stelle, die aus irgendeinem Grund eine lokale Erhöhung der Steifigkeit der Dichtung erfordert.

Verfahren mit den eingangs erwähnten Merkmalen gehen aus der EP 1 452 372 A1, der GB 1 559 251 A, der US 2005/123718 A1, der DE 10 2007 018 792 A1 sowie der DE 78 33 597 U1 hervor. GB 1 559 251 A erwähnt, dass das verfestigte Material zwischen Unregelmäßigkeiten der Hohlraumwand mechanisch gehalten wird.

Durch die vorliegende Erfindung wird ein neues Verfahren zur Herstellung eines stellenweise verstärkten Dichtungsstrangs der eingangs erwähnten Art geschaffen, das dadurch gekennzeichnet ist, dass zur Fixierung des verfestigten Materials durch Formschluss von der Hohlraumwand in den Hohlraum vorstehende, periodisch wiederkehrende Vorsprünge durch variable Extrusion des Dichtungsstrangs gebildet werden.

Vorteilhaft ergibt sich nach diesem Verfahren eine sichere Fixierung lokaler Verstärkungen.

Das fließfähige Material kann durch eine Öffnung des Hohlraums an einem Strangende hindurch zu der Längsposition geleitet oder durch die Wand des Hohlraums hindurch in den Hohlraum eingebracht werden.

Die Einbringung des fließfähigen Materials durch die Öffnung am Strangende hindurch kann mit Hilfe einer in Stranglängsrichtung in den Hohlraum eingeschobenen Leitungslanze erfolgen.

Zum Einbringen des fließfähigen Materials durch die Wand des Hohlraums hindurch kann eine in der Hohlraumwand gebildete Öffnung genutzt werden. Alternativ erfolgt die Einbringung von fließfähigem Material mit Hilfe einer ein Einstichloch erzeugenden Injektionskanüle. Zweckmäßig hinterlässt die an der Öffnung abgeschrägte Injektionskanüle nur einen Einstichschlitz.

Das verfestigte Material kann in dem Hohlraum ferner durch Anhaften der Hohlraumwand in Stranglängsrichtung fixiert werden, um zu verhindern, dass die gebildete Verstärkung innerhalb der Dichtung verrutscht.

In einer Ausführung des Verfahrens füllt das fließfähige Material den Hohlraum im Querschnitt nur zum Teil aus, um ein gewünschtes Verformungs- oder/und Verstärkungsverhalten zu erzielen.

Zur teilweisen Ausfüllung kann eine den Hohlraum in Strangquerrichtung unterteilende Trennwand gebildet und das fließfähige Material nur in einen Teilraum eingebracht werden.

In einer weiteren Ausführungsform wird der Dichtungsstrang unter Bildung einer rohrförmigen Auskleidung des Hohlraums durch das fließfähige bzw. verfestigte Material um seine Längsachse gedreht. Bei Drehung um 360° ergibt sich eine schlauchförmige Innenauskleidung.

Zur gezielten Formung des eingebrachten Materials kann der Dichtungsstrang auch geeignet durch Quetschung bearbeitet werden.

Als fließfähiges Material wird vorzugsweise ein mit Kautschuk modifizierter Polyester oder Polyether eingebracht.

Zweckmäßig sorgt man für eine Verfestigung des fließfähigen Materials zu einem geschäumten Material.

Die Erfindung wird nachfolgend unter Bezug auf die beiliegenden, verschiedene Ausführungsformen des Verfahrens beschreibende Zeichnungen weiter erläutert. Es zeigen:
- Fig. 1: die Bildung einer lokalen Verstärkung durch Injektion,
- Fig. 2: die Bildung einer lokalen Verstärkung an einem eingebauten Dichtungsstrang,
- Fig. 3: die Einbringung von fließfähigem Material in einen Dichtungshohlraum durch eine vorgefertigte Öffnung hindurch,
- Fig. 4: eine die erfindungsgemäße Fixierung der Verstärkung innerhalb eines Hohlraums erläuternde Darstellung,
- Fig. 5: eine die Bildung einer schlauchförmigen Innenauskleidung als Verstärkung erläuternden Darstellung,
- Fig. 6: die Injizierung von fließfähigem Material in einen Dichtungsstrang mit in Querrichtung unterteiltem Hohlraum, und
- Fig. 7: eine die Einbringung von fließfähigem Material in einen Hohlraum einer Dichtung durch eine Endöffnung hindurch erläuternde Darstellung.

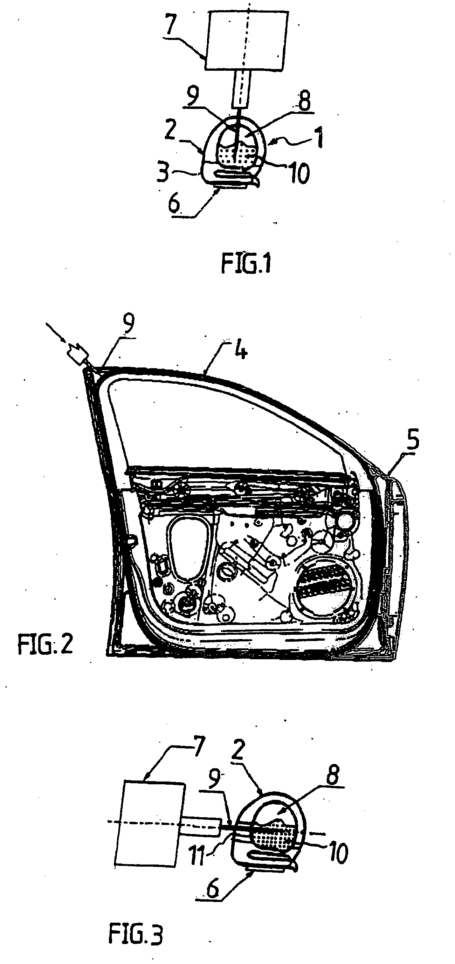

Ein in Fig. 1 im Querschnitt gezeigter Dichtungsstrang 1 mit einem schlauchförmigen Dichtungsabschnitt 2 und einem Befestigungsabschnitt 3 dient zur Bildung einer Dichtung 4, die an einer in Fig. 2 dargestellten Fahrzeugtür umläuft.

Der die Dichtung 4 bildende Dichtungsstrang 1 wird, vor oder nach der Verbindung mit der Tür 5, in dem gezeigten Beispiel über ein doppeltklebendes Klebeband 6, an vorbestimmten Stellen verstärkt.

Mit Hilfe einer Injektionsvorrichtung 7, die mit einer Injektionskanüle 9 versehen ist, wird in den Hohlraum 8 des schlauchförmigen Dichtungsabschnitts 1 ein fließfähiges Material 10 eingebracht. Bei dem fließfähigen Material 10 handelt es sich in dem gezeigten Beispiel um ein mit Kautschuk modifiziertes Polyether oder Polyester, das sich in dem Hohlraum 8 zu einem geschäumten, elastisch verformbaren Material verfestigt.

Als zu verstärkende Stellen kommen z.B. Biegungen in Betracht, an denen sich der Dichtungsstrang ohne Verstärkung in unerwünschter Weise verformen würde. Darüber hinaus können bestimmte Stellen der Dichtung eines erhöhten Anpresswiderstand erfordern.

Die an der Öffnung abgeschrägte Injektionskanüle 9 hinterlässt einen kaum sichtbaren Einstechschlitz, der zudem an einer uneinsehbaren Stelle der Dichtung gebildet sein könnte.

Wie Fig. 3 zeigt, ließe sich das Einbringen des fließfähigen Materials in den Hohlraum 8 auch durch eine vorgefertigte Öffnung 11 in der Wand des schlauchförmigen Dichtungsabschnitts 2 hindurch einbringen.

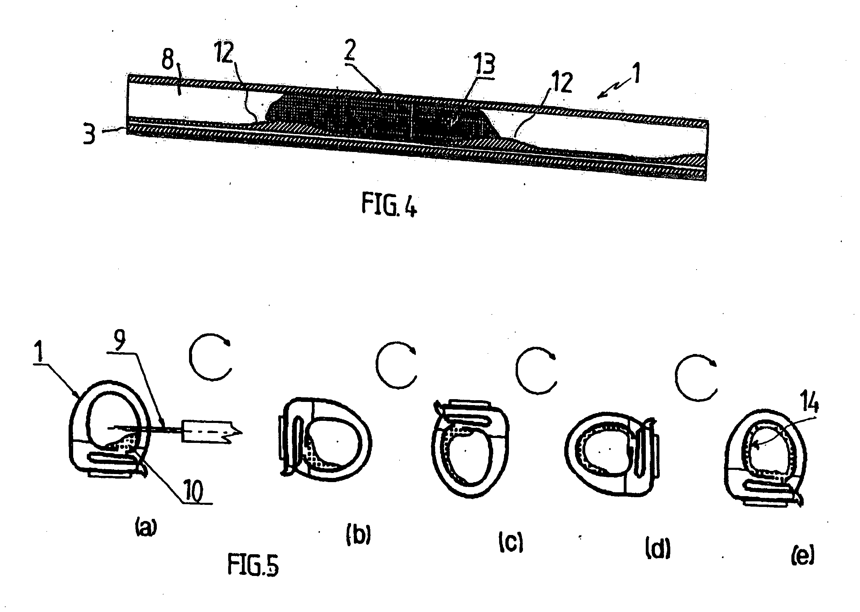

Der in Fig. 4 abschnittsweise in einem Längsschnitt dargestellte Dichtungsstrang 1 weist ins Innere des Hohlraums 8 vorstehende, periodisch wiederkehrende Vorsprünge 12 auf, die dafür sorgen, dass eine durch das fließfähige Material 10 gebildete Verstärkung 13 in Längsrichtung des Dichtungsstrangs arretiert ist und somit nicht verrutschen kann. Statt durch einen solchen Formschluss kann natürlich auch eine Arretierung durch Anhaften des sich verfestigenden Materials an der Innenwand des Hohlraums 8 gegeben sein.

Das fließfähige Material 10 bzw. die daraus gebildete Verstärkung braucht nicht wie die Verstärkung 13 den Hohlraum 8 im Querschnitt vollständig auszufüllen. Fig. 5 zeigt, wie durch Drehung des Dichtungsstrangs 1 um seine Längsachse um 360° aus fließfähigem injizierten Material 10 als Verstärkung eine schlauchförmige Innenauskleidung 14 gebildet werden kann.

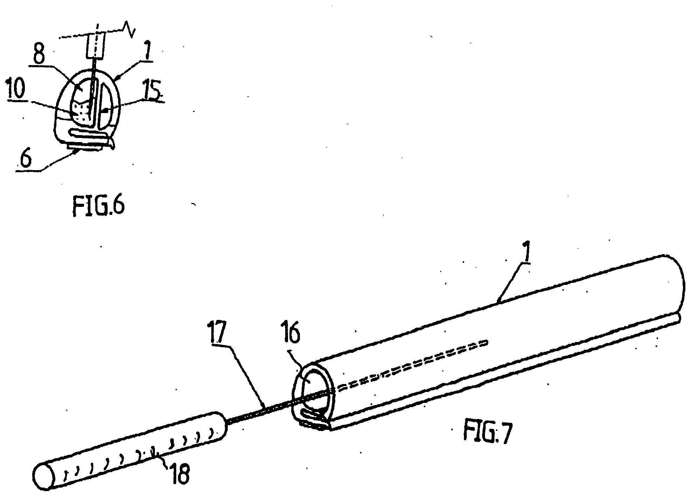

Eine weitere Möglichkeit, in einem Hohlraum gezielt Verstärkungsmaterial 10 anzuordnen, zeigt Fig. 6. Der Hohlraum 8 ist quer zur Stranglängsrichtung durch eine Trennwand 15 unterteilt.

Fig. 7 zeigt die Einbringung von fließfähigem Material durch eine Endöffnung 16 des Dichtungsstrangs 1 hindurch. Eine fließfähiges Material leitende Lanze 17 wird durch die Öffnung 16 hindurch in Stranglängsrichtung eingeschoben, bis das Ende der Lanze die vorbestimmte, mit einer Verstärkung zu versehende Stelle erreicht hat. Zur Bestimmung dieser Stelle ist die Lanze 17 z.B. mit einer Längenskala 18 versehen. In Betracht kämen auch Endanschläge.

## Patentansprüche

1. Verfahren zur Herstellung eines stellenweise verstärkten, schlauchartig mit einem Hohlraum (8) extrudierten Dichtungsstrangs (1), wobei an wenigstens einer vorbestimmten Längsposition des Dichtungsstrangs (1) in den Hohlraum (8) ein den Dichtungsstrang (1) verstärkendes, fließfähiges und sich in dem Hohlraum (8) zu einem elastisch verformbaren Material (13,14) verfestigendes Material (10) eingebracht und das verfestigte Material (10) in dem Hohlraum (8) durch Formschluss mit der Hohlraumwand in Stranglängsrichtung fixiert wird,
**dadurch gekennzeichnet,**
**dass** zur Fixierung des verfestigten Materials (10) durch Formschluss von der Hohlraumwand in den Hohlraum (8) vorstehende, periodisch wiederkehrende Vorsprünge (12) durch variable Extrusion des Dichtungsstrangs (1) gebildet werden.

2. Verfahren nach Anspruch 1,
**dadurch gekennzeichnet,**
**dass** das fließfähige Material (10) durch eine Öffnung (16) des Hohlraums (8) an einem Strangende hindurch zu der Längsposition geleitet oder durch die Wand des Hohlraums (8) hindurch in den Hohlraum (8) eingebracht wird.

3. Verfahren nach Anspruch 2,
**dadurch gekennzeichnet,**
**dass** das fließfähige Material (10) durch die Öffnung (16) am Strangende hindurch mit Hilfe einer in Stranglängsrichtung in den Hohlraum (8) eingeschobenen Leitungslanze (17) eingebracht wird.

4. Verfahren nach Anspruch 2,
**dadurch gekennzeichnet,**
**dass** das fließfähige Material (10) in dem Hohlraum (8) ferner durch eine Öffnung (11) in der Hohlraumwand hindurch oder mit Hilfe einer in der Hohlraumwand ein Einstichloch erzeugenden Injektionskanüle (9) eingebracht wird.

5. Verfahren nach einem der Ansprüche 1 bis 4,
**dadurch gekennzeichnet,**
**dass** das verfestigte Material (10) in dem Hohlraum (8) ferner durch Anhaften an der Hohlraumwand in Stranglängsrichtung fixiert wird.

6. Verfahren nach einem der Ansprüche 1 bis 5,
**dadurch gekennzeichnet,**
**dass** der Hohlraum (8) im Querschnitt durch das fließfähige Material (10) nur zum Teil gefüllt wird.

7. Verfahren nach Anspruch 6,
**dadurch gekennzeichnet,**
**dass** der Hohlraum (8) im Querschnitt durch eine Trennwand (15) unterteilt wird.

8. Verfahren nach Anspruch 6 oder 7,
**dadurch gekennzeichnet,**
**dass** der Dichtungsstrang (1) unter Bildung einer rohrförmigen Auskleidung (14) des Hohlraums (8) durch das fließfähige Material (10) um seine Längsachse gedreht wird.

9. Verfahren nach einem der Ansprüche 1 bis 8,
**dadurch gekennzeichnet,**
**dass** der Dichtungsstrang (1) zur gezielten Formung des eingebrachten fließfähigen Materials (10) gequetscht wird.

10. Verfahren nach einem der Ansprüche 1 bis 9,
**dadurch gekennzeichnet,**
**dass** als fließfähiges Material ein mit Kautschuk modifiziertes Polyester oder Polyether eingebracht wird.

11. Verfahren nach einem der Ansprüche 1 bis 10,
**dadurch gekennzeichnet,**
**dass** das fließfähige Material zu einem geschäumten Material verfestigt wird.

12. Stellenweise verstärkter Dichtungsstrang erhältlich durch das Verfahren nach einem der Ansprüche 1 bis 11.

## Claims

1. Method for producing a sealing strand (1) that is extruded in the manner of a tube with a cavity (8) and is reinforced in some locations, wherein a material (10) that reinforces the sealing strand (1), is flowable and solidifies in the cavity (8) to form an elastically deformable material (13, 14) is introduced into the cavity (8) at at least one predetermined longitudinal position of the sealing strand (1) and the solidified material (10) is fixed in the cavity (8) in the longitudinal direction of the strand by form closure with the cavity wall,
**characterized**
**in that**, for fixing the solidified material (10) by form closure with the cavity wall, periodically recurring projections (12) that project into the cavity (8) are formed by variable extrusion of the sealing strand (1).

2. Method according to Claim 1,
**characterized**
**in that** the flowable material (10) is directed to the longitudinal position through an opening (16) of the cavity (8) at one end of the strand or is introduced into the cavity (8) through the cavity wall (8).

3. Method according to Claim 2,
**characterized**
**in that** the flowable material (10) is introduced through the opening (16) at the end of the strand with the aid of a directing lance (17) that is pushed into the cavity (8) in the longitudinal direction of the strand.

4. Method according to Claim 2,
**characterized**
**in that** the flowable material (10) is also introduced into the cavity (8) through an opening (11) in the cavity wall or with the aid of an injection cannula (9) creating a puncture hole in the cavity wall.

5. Method according to one of Claims 1 to 4,
**characterized**
**in that** the solidified material (10) is also fixed in the cavity (8) by adhesive attachment to the cavity wall in the longitudinal direction of the strand.

6. Method according to one of Claims 1 to 5,
**characterized**
**in that** the cavity (8) is only partly filled in cross section by the flowable material (10).

7. Method according to Claim 6,
**characterized**
**in that** the cavity (8) is divided in cross section by a separating wall (15).

8. Method according to Claim 6 or 7,
**characterized**
**in that** the sealing strand (1) is turned about its longitudinal axis while thereby forming a tubular lining (14) of the cavity (8) by the flowable material (10).

9. Method according to one of Claims 1 to 8,
**characterized**
**in that** the sealing strand (1) is pinched for deliberately shaping the flowable material (10) introduced.

10. Method according to one of Claims 1 to 9,
**characterized**
**in that** a polyester or polyether modified with rubber is introduced as the flowable material.

11. Method according to one of Claims 1 to 10,
**characterized**
**in that** the flowable material is solidified to form a foamed material.

12. Sealing strand reinforced at some locations that can be obtained by the method according to one of Claims 1 to 11.

## Revendications

1. Procédé pour la fabrication d'un boudin d'étanchéité (1) extrudé sous forme de flexible doté d'un espace creux (8), renforcé par endroits, un matériau (10) renforçant le boudin étanchéité (1), pouvant s'écouler et se solidifiant dans l'espace creux (8) en un matériau (13,14) élastiquement déformable étant introduit en au moins une position longitudinale prédéterminée du boudin d'étanchéité (1) dans l'espace creux (8) et le matériau (10) solidifié étant fixé dans l'espace creux (8) par fermeture géométrique à la paroi de l'espace creux dans la direction longitudinale du boudin, **caractérisé en ce que** pour la fixation du matériau (10) solidifié par fermeture géométrique, la paroi d'espace creux forme des saillies (12) revenant périodiquement, s'avançant dans l'espace creux (8), par extrusion variable du boudin d'étanchéité (1).

2. Procédé selon la revendication 1, **caractérisé en ce que** le matériau (10) pouvant s'écouler est guidé à travers une ouverture (16) de l'espace creux (8) en une extrémité du boudin vers la position longitudinale ou introduit à travers la paroi de l'espace creux (8) dans l'espace creux (8).

3. Procédé selon la revendication 2, **caractérisé en ce que** le matériau (10) pouvant s'écouler est guidé à travers l'ouverture (16) en l'extrémité du boudin à l'aide d'une lance de guidage (17) introduite dans la direction longitudinale du boudin dans l'espace creux (8).

4. Procédé selon la revendication 2, **caractérisé en ce que** le matériau (10) pouvant s'écouler est en outre introduit dans l'espace creux (8) à travers une ouverture (11) dans la paroi de l'espace creux ou à l'aide d'une canule d'injection (9) générant un trou de piqûre dans la paroi de l'espace creux.

5. Procédé selon l'une quelconque des revendications 1 à 4, **caractérisé en ce que** le matériau (10) solidifié est en outre fixé dans l'espace creux (8) par adhérence à la paroi de l'espace creux dans la direction longitudinale du boudin.

6. Procédé selon l'une quelconque des revendications 1 à 5, **caractérisé en ce que** l'espace creux (8) n'est que partiellement rempli dans la section transversale par le matériau (10) pouvant s'écouler.

7. Procédé selon la revendication 6, **caractérisé en ce que** l'espace creux (8) est divisé par une paroi de séparation (15) dans la section transversale.

8. Procédé selon la revendication 6 ou 7, **caractérisé en ce que** le boudin d'étanchéité (1) est tourné autour de son axe longitudinal avec formation d'un revêtement (14) tubulaire de l'espace creux (8) par le matériau (10) pouvant s'écouler.

9. Procédé selon l'une quelconque des revendications 1 à 8, **caractérisé en ce que** le boudin d'étanchéité (1) est écrasé pour un formage ciblé du matériau (10) pouvant s'écouler introduit.

10. Procédé selon l'une quelconque des revendications 1 à 9, **caractérisé en ce qu'**on introduit, comme matériau pouvant s'écouler, un polyester ou un polyéther modifié par du caoutchouc.

11. Procédé selon l'une quelconque des revendications 1 à 10, **caractérisé en ce que** le matériau pouvant s'écouler est solidifié en un matériau moussé.

12. Boudin d'étanchéité renforcé par endroits pouvant être obtenu par le procédé selon l'une quelconque des revendications 1 à 11.
